# EUROPEAN PATENT APPLICATION

(11) **EP 1 767 323 A2**
(43) Date of publication of application: **28.03.2007**
(21) Application number: 06020194.4
(22) Date of filing: 27.09.2006
(51) Int. Cl.: B28D 1/14, B25H 1/00, B23Q 11/10, B28D 7/02, B23B 49/02

(54) **Equipment for drilling ceramic articles for covering walls particularly tiles or the like**

(30) Priority: 27.09.2005 IT MO20050245; 23.12.2005 IT MO20050030 U
(71) Applicant: S.I.R.I. S.R.L., 41100 Modena MO (IT)
(72) Inventor: Trevisi, Franco, 41100 Modena (MO) (IT)
(74) Representative: Brogi, Graziano

(57) **Abstract**

The present invention refers to an equipment (1) for drilling ceramic articles (4) for covering walls, particularly tiles or the like, which comprises a supporting frame (2) for the centring means (11,12) of the rotation axis of a tool (3) for drilling a ceramic covering (4) of a wall, and at least one hollow body (5) for housing the work portion of the tool (3) on the covering and for containing a lubricating and cooling fluid, the frame featuring temporarily attaching means (18a,18b) to the covering.

## Description

The present invention refers to an equipment for drilling ceramic articles for covering walls, particularly tiles or the like.

The need is generally known to drill ceramic wall coverings inside interiors such as bathrooms or kitchens for the installation, for instance, of sanitary ware, mirrors, wall units or the like.

Conventionally, this drilling operation is done manually by an operator using a drill featuring a tool such as a bit or cutter.

The drilling operation generally requires a fair amount of precision, which cannot always be achieved by means of a manual operation, including following work conditions which are not always perfect due to confined spaces or work surfaces that cannot easily be reached by the operator.

Wall covering drilling support equipment is known comprising a supporting frame featuring a wall attaching suction-cup and a series of centring holes.

Once the frame has been suitably positioned on the covering, a predetermined centring hole is able to delimit the portion of the covering surface where an operator has to drill.

The drilling operation is conventionally performed manually by the operator by placing on the above mentioned centring hole a tool such as, for instance, a bit or cutter coupled to a drill spindle.

This known equipment is not without drawbacks, including the fact that the drilling operation is in any case hard to perform and does not permit angling the tool properly beforehand on the covering.

Furthermore, the drilling of wall tiles made of hard material such as porcelain stoneware for example requires the use of special tools such as diamond bits or cutters and these require constant spraying with water on the portion of ceramic covering to be drilled and on the cutter cutting surface, so as to prevent the fast degradation of the cutting surface of the cutter or bit or the imperfect cutting of the tile.

To this must be added that any manual soaking with water or other lubricating fluids by a second operator or by the operator himself causes the fluid to disperse into the surrounding environment during drilling.

The principal aim of this invention is to eliminate the drawbacks of the known technology complained of above and excogitate a piece of equipment for drilling ceramic articles for covering walls that permits drilling ceramic articles for covering walls that are made of hard material, such as, for example, porcelain stoneware.

Another purpose of this invention is to limit the dispersion inside the work environment of fluids used during drilling, or dust created by drilling.

A further purpose of this invention is to make it easier to centre the tool on the portion of covering to be drilled during drilling.

Another purpose of this invention is to ensure extensive versatility of use and make drilling easier even in the presence of obstacles such as wall mirrors or the like on the wall to be drilled.

As part of such technical aim, another purpose of the present invention is to achieve the preceding aims with a simple structure, of relatively practical implementation, safe use and effective operation, as well as of a relatively low cost.

This aim and these purposes are all achieved by the present equipment for drilling ceramic articles for covering walls, particularly tiles or the like, characterized in that it comprises a supporting frame for the centring means of the rotation axis of a tool for drilling a ceramic covering of a wall, and at least one hollow body for housing the work portion of said tool on said covering and for containing a lubricating and cooling fluid, said frame featuring temporarily attaching means to said covering.

Further characteristics and advantages of the present invention will appear even more evident from the detailed description of two preferred, but not exclusive, forms of embodiment of an equipment for drilling ceramic articles for covering walls, particularly tiles or the like, illustrated by way of non limiting example in the accompanying drawings, wherein:

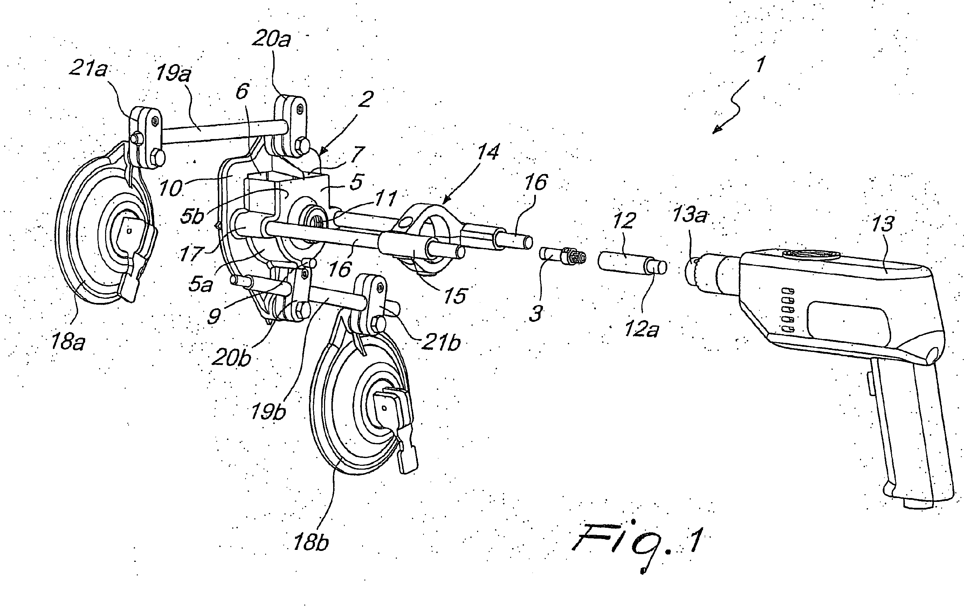

figure 1 is an axonometric and exploded view of a first embodiment of the equipment according to the invention;
figure 2 is an axonometric view of the first embodiment of the equipment according to the invention complete with drill;

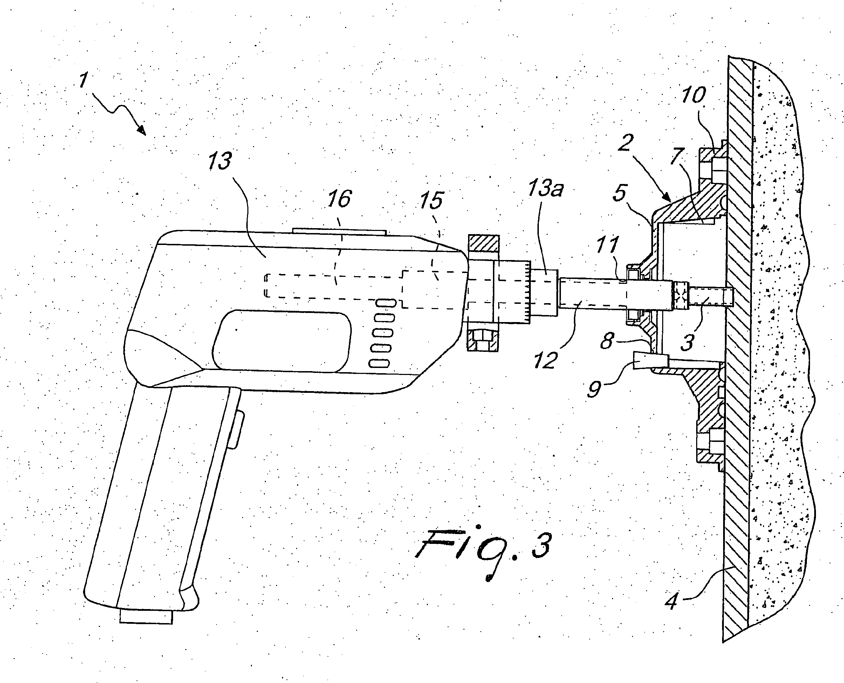

figure 3 is a side and section view of the first embodiment of the equipment according to the invention complete with drill;
figure 4 is an axonometric and exploded view of a second embodiment of the equipment according to the invention;
figure 5 is an axonometric view of the second embodiment of the equipment according to the invention complete with drill;
figure 6 is a side and section view of the second embodiment of the equipment according to the invention complete with drill.

With special reference to the above figures, an equipment for drilling ceramic articles for covering walls, particularly for drilling tiles or the like made of hard material such as, for example, porcelain stoneware has been generally designated by reference number 1.

The equipment 1 comprises a frame 2 supporting centring means of the rotation axis of a tool 3 able to drill a ceramic covering 4. The tool 3 is, for example, a diamond cutter of the type conventionally used to drill tiles made of materials such as porcelain stoneware.

Frame 2 also supports at least one hollow body 5 for housing the work portion of the tool 3 on the covering 4, where by "work portion" is meant the end or, generally, the portion of surface defined on the tool 3 which is suitable for being placed in contact with a portion of the ceramic covering 4 during the execution of the drilling operation.

The hollow body 5 is suitable for containing a fluid which on coming into contact with the work portion of the tool 3, during drilling, favours the cooling and/or lubricating of the tool.

In particular, the hollow body 5 has a substantially boxed conformation and comprises an access opening 6 of the tool 3 to at least one portion of the covering 4, an inlet 7 for fluid inflow and an outlet 8 for removing the fluid which, in equipment 1 operating conditions is blocked by sealed closing means such as, for example, a plug 9.

Usefully, the frame 2 and the hollow body 5 are made in a single body and the frame 5 comprises a supporting plate 10 which can be positioned by contact against the covering 4.

The access opening 6 is defined on this supporting plate 10 and is delimited by a surrounding wall 5a of the hollow body 5 which is defined overhanging the supporting plate 10 on the face opposite the face intended to be placed in contact with the covering 4.

The hollow body 5 also comprises a front wall 5b, substantially plate shaped and opposite the access opening 6, and intended to define, together with the surrounding wall 5a, a cavity C for housing the above fluid.

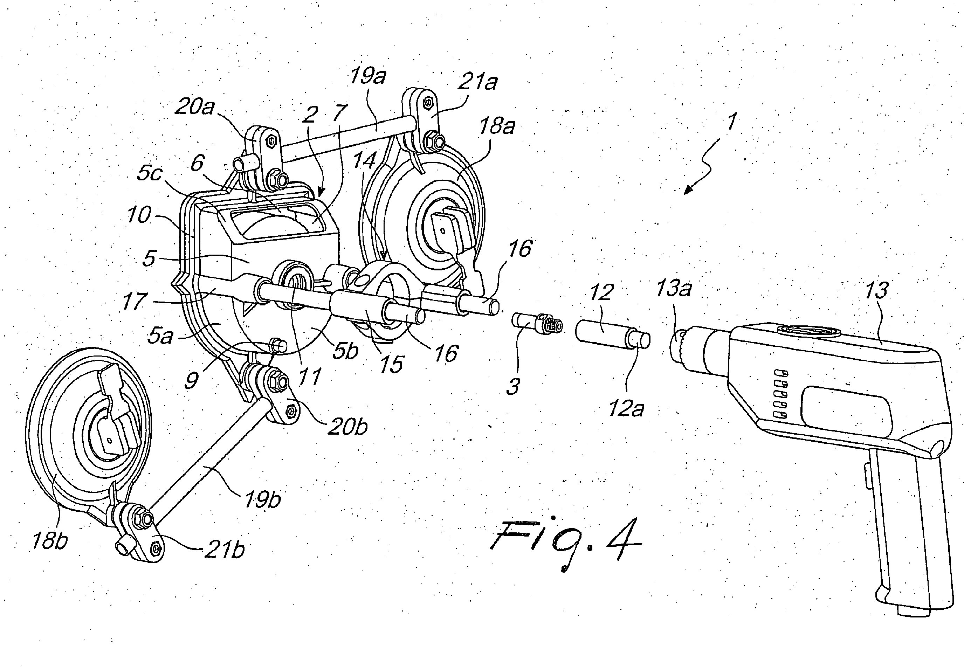

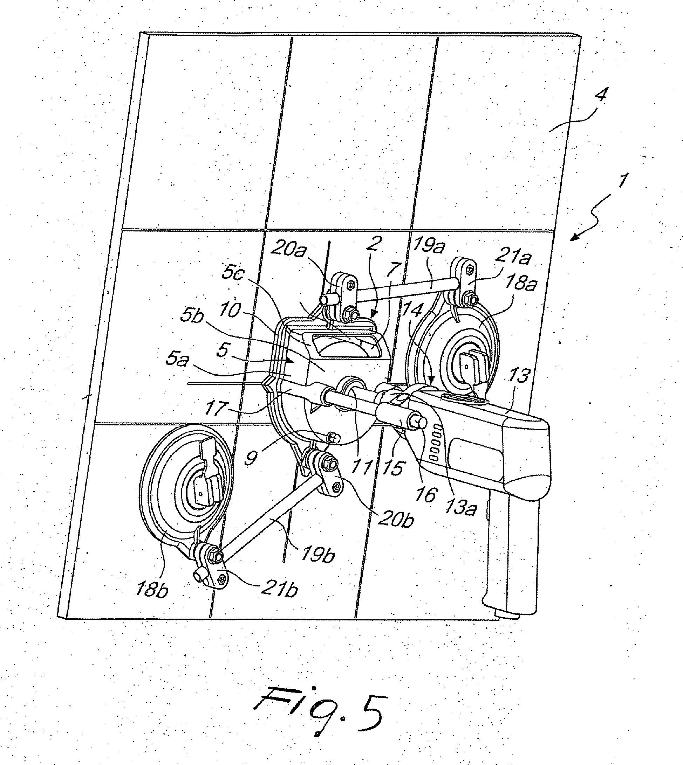

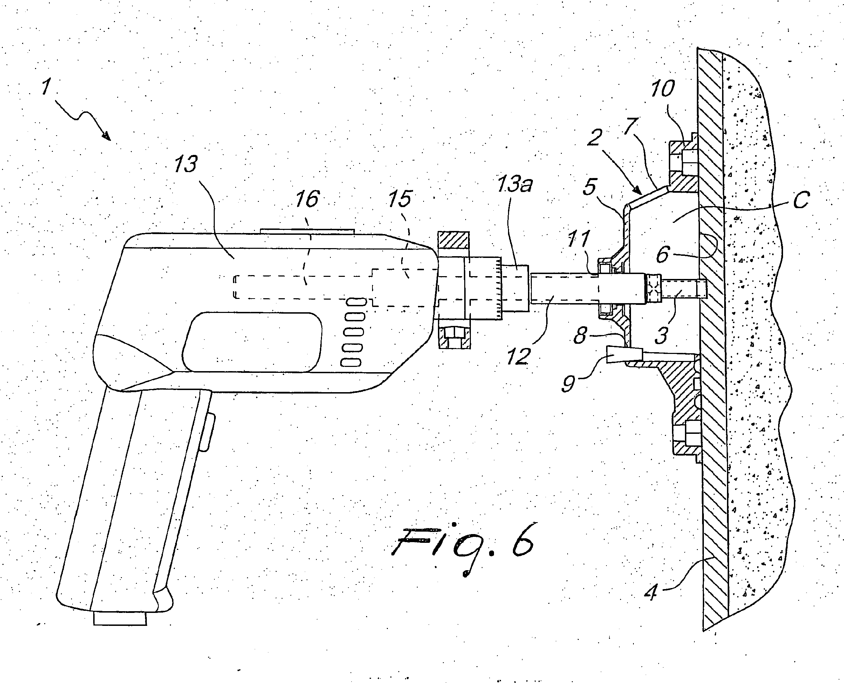

With particular reference to the second embodiment of the equipment 1, shown in figures 4, 5 and 6, the inlet 7 is defined on a portion of upper surface 5c of the front wall 5b.

In particular, by the words "front" and "upper" reference is made in this description to the position of the equipment 1, especially the frame 2, following the application of the covering 4, and with respect to an operator carrying out the drilling operation.

Advantageously, the inlet 7 is defined close to the upper edge of the front wall 5b, and the portion of upper surface 5c is substantially flat and tilted with respect to the position of the plain defined by the supporting plate 10 to limit, together with the surrounding wall 5a, the possibility of accidental outflow of the fluid from the cavity C, including when the equipment 1 is applied to substantially horizontal surfaces.

The centring means comprise a centring hole 11, defined on the front wall 5b, inside which is fitted, sliding and sealed, a small driving shaft 12 which can be coupled, at one end, with the tool 3 and, at the opposite end with actuator means 13 for starting rotation.

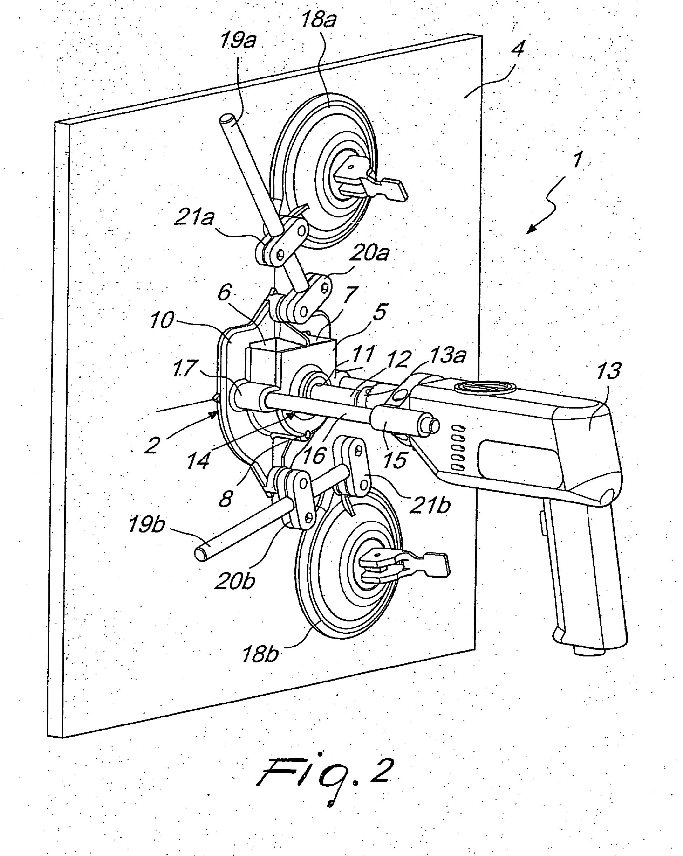

Advantageously, as shown in figures 2, 4, 5 and 6, the equipment 1 involves the use of actuator means 13 for starting rotation, such as standard drills, the spindle of which 13a can be coupled to an appendix 12a defined at the end of the small driving shaft 12 which protrudes from the centring hole 11, outside the hollow body 5.

Similarly, the tool 3, which can be coupled at the end of the driving shaft 12 which is inside the hollow body 5, can be of the bit or cutter type conventionally used.

Advantageously, the equipment 1 comprises guide means 14 able to slide closer to or away from the actuator means 13 with respect to the frame 2, which comprise a removable coupling element 15 of the actuator means 13, of the template type, which can be coupled with the front portion of a drill.

In particular, as shown in the above figures, the guide means 14 comprise a pair of guide rods 16 fitted, at one end, in supports 17 defined overhanging from the supporting plate 10 at completely opposite points with respect to the centring hole 11.

The guide rods 16 extend from said supports 17, parallel and substantially orthogonal to the position of the plain defined by the supporting plate 10, and act as a sliding support for the template 15, which can move closer to or away from the centring hole 11.

Usefully, the template 15 features fastening means of the screw type for tightening the front portion of the drill 13.

The frame 2 features temporarily attaching means to the covering 4 which comprise a first suction-cup 18a and a second suction-cup 18b which are associated with the frame 2 by means of articulation.

More specifically, the means of articulation comprise a first arm 19a which is associated axially sliding with a first clamp 20a hinged to the supporting plate 10; the suction-cup 18a is hinged to a second clamp 21a associated sliding with the arm 19a.

A second arm 19b is associated axially sliding with a third clamp 20b hinged to the supporting plate 10; the suction-cup 18b is hinged to a fourth clamp 21 b associated sliding with arm 19b.

Each of the first, second, third and fourth clamps 20a, 21a, 20b and 21b feature tightening means for fastening on the respective arms 19a and 19b.

It has in practice been found how the described invention achieves the desired purposes, and more specifically the fact must be emphasised that the presence of the hollow body for containing a lubricating fluid permits the use of tools such as diamond bits or cutters for drilling the coverings made of hard material such as, for instance, porcelain stoneware.

The presence of the hollow body permits, during drilling, containing the lubricating fluid and collecting the dust produced by drilling, thus preventing this from being dispersed in the work environment.

Furthermore, the presence of the guide and centring means, as well as the presence of the means of adjustment, permits precise alignment of the tool with the portion of covering to be drilled and the correct angling of the tool during drilling.

The possibility of adjusting the position of the suction-cups with respect to the frame also permits fitting the equipment also at the portions of covering to be drilled which are arranged inside small environments or between obstacles such as mirrors, wall units or the like.

With particular reference to the second embodiment of the equipment, a further advantage consists in the particular arrangement of the fluid inlet, which permits fitting the equipment also on horizontal surfaces, thus avoiding at the same time the accidental outflow of lubricating and cooling fluid from the hollow body.

The invention thus conceived is susceptible of numerous modifications and variations, all of which falling within the scope of the inventive concept.

Furthermore all the details can be replaced with others that are technically equivalent.

In practice, the materials used, as well as the shapes and dimensions, may be any according to requirements without because of this moving outside the protection scope of the following claims.

## Claims

1. Equipment for drilling ceramic articles for covering walls, particularly tiles or the like, **characterized in that** it comprises a supporting frame for the centring means of the rotation axis of a tool for drilling a ceramic covering of a wall, and at least one hollow body for housing the work portion of said tool on said covering and for containing a lubricating and cooling fluid, said frame featuring temporarily attaching means to said covering.

2. Equipment according to claim 1, **characterized in that** said hollow body has a substantially boxed conformation and comprises at least an access opening of said tool to at least one portion of said covering.

3. Equipment according to one or more of the preceding claims, **characterized in that** said hollow body comprises at least an inlet for said fluid.

4. Equipment according to one or more of the preceding claims, **characterized in that** said hollow body comprises at least a portion of surface substantially opposite said access opening and featuring said inlet.

5. Equipment according to one or more of the preceding claims, **characterized in that** said hollow body comprises at least a surrounding wall delimiting said access opening.

6. Equipment according to one or more of the preceding claims, **characterized in that** said hollow body comprises at least a front wall, substantially opposite said access opening, and intended to define, together with said surrounding wall, at least a cavity for housing said fluid.

7. Equipment according to one or more of the preceding claims, **characterized in that** said inlet is defined on a portion of upper surface of said front wall.

8. Equipment according to one or more of the preceding claims, **characterized in that** said front wall is substantially plate shaped.

9. Equipment according to one or more of the preceding claims, **characterized in that** said frame comprises at least a supporting plate which can be positioned by contact on said covering.

10. Equipment according to one or more of the preceding claims, **characterized in that** said hollow body and said frame are made in a single body.

11. Equipment according to one or more of the preceding claims, **characterized in that** said surrounding wall overhangs from the face of said supporting plate opposite the face which can be placed in contact with said covering.

12. Equipment according to one or more of the preceding claims, **characterized in that** said portion of upper surface is substantially flat and tilted with respect to the position of the plain defined by said supporting plate.

13. Equipment according to one or more of the preceding claims, **characterized in that** said hollow body comprises at least an outlet of said fluid.

14. Equipment according to one or more of the preceding claims, **characterized in that** said hollow body comprises sealed closing means of said outlet.

15. Equipment according to one or more of the preceding claims, **characterized in that** said centring means comprise at least a centring hole which is defined on said front wall.

16. Equipment according to one or more of the preceding claims, **characterized in that** said centring means comprise at least a small driving shaft which is fitted, sliding and sealed, inside said centring hole which can be coupled, at one end, with said tool and, at the opposite end, with actuator means for starting rotation.

17. Equipment according to one or more of the preceding claims, **characterized in that** said equipment comprises guide means of said actuator means.

18. Equipment according to one or more of the preceding claims, **characterized in that** said guide means comprise at least a removable coupling element of said actuator means which is associated sliding with respect to said frame and able to slide closer to or away from said centring hole.

19. Equipment according to one or more of the preceding claims, **characterized in that** said guide means comprise at least a guide rod extending from said frame and to which said coupling element is associated sliding.

20. Equipment according to one or more of the preceding claims, **characterized in that** said guide means comprise a pair of rods extending from said frame, substantially orthogonal to the position of the plain defined by said supporting plate and parallel with each other.

21. Equipment according to one or more of the preceding claims, **characterized in that** said temporarily attaching means comprise at least a suction-cup.

22. Equipment according to one or more of the preceding claims, **characterized in that** it comprises means of articulation of said at least one suction-cup with respect to said frame.

23. Equipment according to one or more of the preceding claims, **characterized in that** said means of articulation comprise at least an arm which is associated rotatable and axially sliding with said frame, said suction-cup being associated sliding with said arm.

24. Equipment according to one or more of the preceding claims, **characterized in that** said means of articulation comprise at least a first clamp which is sliding along said at least one arm and hinged to said frame, and at least a second clamp which is sliding along said at least one arm and hinged to said at least one suction-cup, said first clamp and said second clamp being tightenable for fastening on said at least one arm.

25. Equipment according to one or more of the preceding claims, **characterized in that** said temporarily attaching means comprise a first suction-cup and a second suction-cup which are articulated to said frame by means of a first arm and a second arm respectively.
